# EUROPÄISCHE PATENTANMELDUNG

(11) **EP 4 708 212 A1**
(43) Veröffentlichungstag der Anmeldung: **11.03.2026**
(21) Anmeldenummer: 25200408.0
(22) Anmeldetag: 05.09.2025
(51) Int. Cl.: G06V 10/147, G06V 10/776, G06V 10/98

(54) **SYSTEM ZUR VERBESSERTEN REFERENZMUSTERERKENNUNG**

(30) Priorität: 09.09.2024 DE 102024208550
(71) Anmelder: Technische Hochschule Köln KöR, 50968 Köln (DE)
(72) Erfinder: Vlasuk, Vladislav, 50931 Köln (DE); Tiltmann, Tom, 52064 Aachen (DE)
(74) Vertreter: RCD-Patent Giesen, Schmelcher & Griebel Patentanwälte PartG mbB

(57) **Zusammenfassung**

Die Erfindung betrifft ein System (1) zur verbesserten Referenzmustererkennung aufweisend einen optischen Sensor (K), wobei in Richtung der Bildachse des optischen Sensors zumindest zwei Polarisationsfilter (P1, P2) in Bildachsenrichtung hintereinander angeordnet sind, wobei die zumindest zwei Polarisationsfilter (P1, P2) relativ zueinander verstellbar sind, wobei zumindest einer der Polarisationsfilter (P1, P2) für die Zwecke der Verstellung elektrisch ansteuerbar verstellbar ist, wobei das System weiterhin eine Verarbeitungseinheit (uC) aufweist, die in Abhängigkeit von einem erfassten Bild durch den optischen Sensor (K) und zumindest einem weiteren Einstellungsdatum des optischen Sensors (K) den zumindest einen elektrisch ansteuerbaren Polarisationsfilter (P1, P2) derartig ansteuert, dass die Polarisationsebenen der zumindest zwei Polarisationsfilter (P1, P2) relativ zueinander verstellt werden, wenn in dem erfassten Bild kein Referenzmuster erkannt wird.

## Beschreibung

Die Erfindung betrifft ein System zur verbesserten Referenzmustererkennung.

### Hintergrund der Erfindung

Referenzmuster werden in vielen Teilen der Technik aber auch in der Medizin verwendet.

Beim optischen Tracking mit Markern werden Markierungen an Objekten (bspw. Waren) durch Kameras millimetergenau geortet. Die Voraussetzung für eine zuverlässige Erkennung ist, dass die eingesetzten Markierungen vollständig und deutlich in ihrer Umgebung sichtbar sind. Dies wird aktuell mit teurer Kameratechnik mit dezidierten Objektiven und Sensoren erreicht. Eine Herausforderung für Kameras ohne dedizierte Objektive oder Sensoren (bspw. MIPI-Kameras, Marktgröße 100.5 Mio. Euro (2022)) (so z.B. Credence Research (2023): MIPI Camera Module Market, online unter: https://www.credenceresearch.com/report/mipi-camera-module-market) bilden erhöhte Lichtbedingungen, wo nicht nur Überbelichtung, sondern auch unerwünschte Reflexionen die Bildqualität verringern. Solche Überbelichtung als auch Reflexionen führen zu erhöhten Fehlerraten und Erkennungslücken beim Einsatz von Referenzmarkierungen.

Aus dem Stand der Technik sind ausgereifte und hochauflösende (8K+ Pixel) Kameras mit dedizierten Sensoren und Objektiven bekannt. Diese Kameras verwenden entweder einen manuell einstellbaren Filter oder eine on-board Vorverarbeitungssoftware, um die Bildqualität zu verbessern und die Anfälligkeit gegenüber Überbelichtung zu reduzieren. Die Auswahl der Hardware und die Implementierung von Optimierungen spielen eine entscheidende Rolle in Bildverarbeitungsverfahren, insbesondere bei der Erkennung von Referenzmarkierungen.

Der aktuelle Stand der Technik zeigt deutliche Nachteile im Zusammenhang mit der Vergrößerung des Kamerasensors und Verwendung dedizierter Objektive:
- Größen- und Gewichtszunahme der Kamera, was besonders bei Anwendungen mit begrenztem Bauraum (Medizintechnik, mobile Geräte) problematisch ist.
- Kostensteigerung für Kamera und Objektive, da die Erhöhung der Sensorgröße mit höheren Kosten für Kamera als auch Objektive einhergeht und den Einsatz in kostensensiblen Anwendungsbereichen (bspw. Anlageninspektion, -Überwachung) einschränkt.
- Zunehmende Anfälligkeit von Artefakten wie Vignettierung und optischer Verzerrung, was die Bildqualität beeinträchtigt

### Aufgabe

Vor diesem Hintergrund ist es eine Aufgabe der Erfindung eine kostengünstige, für handelsübliche Kameraprodukte ergänzende Lösung anzubieten, die die Erkennung von Referenzmustern auch unter schwierigen Bedingungen verbessert.

### Kurzdarstellung der Erfindung.

Die Aufgabe wird gelöst durch eine Vorrichtung gemäß Anspruch 1. Weitere vorteilhafte Ausgestaltungen sind insbesondere Gegenstand der abhängigen Ansprüche.

Nachfolgend wird die Erfindung näher unter Bezug auf die Figur erläutert.

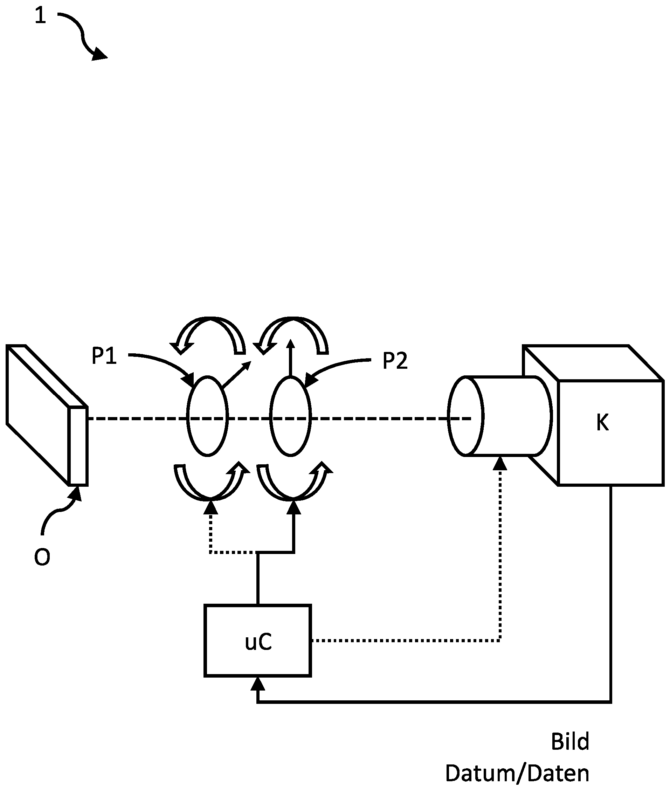

- Fig. 1: zeigt eine schematische Übersicht eines erfindungsgemäßen Systems.

### Ausführliche Darstellung der Erfindung

Nachfolgend wird die Erfindung eingehender unter Bezugnahme auf die Figuren dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Weiterhin wird nachfolgend der Einfachheit halber in aller Regel immer nur auf eine Entität Bezug genommen. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Soweit nachfolgend Verfahren beschrieben werden, sind die einzelnen Schritte eines Verfahrens in beliebiger Reihenfolge anordbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar.

Angaben mit Zahlenwerten sind in aller Regel nicht als exakte Werte zu verstehen, sondern beinhalten auch eine Toleranz von +/- 1 % bis zu +/- 10 %.

Bezugnahme auf Standards oder Spezifikationen sind als Bezugnahme auf Standards bzw. Spezifikationen, die zum Zeitpunkt der Anmeldung und/oder - soweit eine Priorität beansprucht wird - zum Zeitpunkt der Prioritätsanmeldung gelten / galten zu verstehen. Hiermit ist jedoch kein genereller Ausschluss der Anwendbarkeit auf nachfolgende oder ersetzende Standards oder Spezifikationen zu verstehen.

Unter Bezug auf die Figur 1 werden nachfolgend Ausführungsformen der Erfindung erläutert.

In Figur wird ein beispielhaftes System 1 zur verbesserten Referenzmustererkennung gezeigt. Dieses weist einen optischen Sensor K auf.

In Richtung der Bildachse des optischen Sensors - welche als horizontale gestrichelte Linie in Figur 1 angegeben ist - sind zumindest zwei Polarisationsfilter P1, P2 in Bildachsenrichtung hintereinander angeordnet.

Die zumindest zwei Polarisationsfilter P1, P2 sind dabei relativ zueinander verstellbar. D.h. es kann vorgesehen sein, dass nur einer der zumindest zwei Polarisationsfilter P1, P2 verstellbar ist, es kann aber auch vorgesehen sein, dass zwei oder mehr der Polarisationsfilter verstellbar sind.

Dabei ist zumindest einer der Polarisationsfilter P1, P2 für die Zwecke der Verstellung elektrisch ansteuerbar verstellbar. Diese Ansteuerbarkeit ist als Pfeil auf die Drehpfeile an den dargestellten zwei Polarisationsfiltern P1, P2 hervorgehoben.

Das System weist weiterhin eine Verarbeitungseinheit uC auf, die in Abhängigkeit von einem erfassten Bild durch den optischen Sensor K und zumindest einem weiteren Einstellungsdatum des optischen Sensors K den zumindest einen elektrisch ansteuerbaren Polarisationsfilter P1, P2 derartig ansteuert, dass die Polarisationsebenen der zumindest zwei Polarisationsfilter P1, P2 relativ zueinander verstellt werden, wenn in dem erfassten Bild kein Referenzmuster erkannt wird.

D.h., die Erfindung stellt ein hochdynamisches, vorausschauendes Regelsystem zur Verfügung. Durch eine relative Verstellung von Polarisationsfiltern P1, P2 kann sowohl die Belichtungsmenge als auch die Stärke der Reflexionen in Richtung des Kamerasensors reduziert werden.

Dabei kann die Verarbeitungseinheit uC als vorausschauender Regler implementiert sein, der ermittelt anhand vorhandener Umgebungsbedingungen eine bestmögliche Stellung der Polarisationsfilter und Kameraeinstellungen (Helligkeit, Kontrast, Sättigung, Fokussierung) zu einander ermittelt, um sowohl die Bildqualität als auch die Erkennung von Referenzmustern zu steigern.

Insbesondere wird somit eine präzise Steuerung von Polarisationsfilter zu einer gegebenen Einstellung der Kamera K möglich.

Offensichtlich kann die Erfindung auch in bestehende Systeme nachgerüstet werden.

Wird nach der Verstellung weiterhin kein Referenzmuster erkannt, kann erneut eine weitere Verstellung durch die Verarbeitungseinheit veranlasst werden. In aller Regel wird eine weitere Verstellung dazu führen, dass jeweils andere relative Stellungen der Polarisationsfilter zueinander eingestellt werden. Sollte nach einer Vielzahl von Erkennungsversuchen kein Referenzmuster erkannt werden, kann abhängig vom Einsatzgebiet dies als Fehlermeldung an ein anderes System weitergeleitet werden.

In einer Ausführungsform der Erfindung ist das zumindest ein weiteres Einstellungsdatum ausgewählt aus der Gruppe aufweisend Helligkeit, Kontrast, Sättigung, Fokussierung.

Damit können zuverlässige Daten für eine schnelle Einstellung der Polarisationsfilter P1, P2 relativ zueinander aufgesucht werden, die eine Erkennung eines Referenzmusters wahrscheinlich machen.

Gemäß einer weiteren Ausführungsform der Erfindung kann der zumindest ein elektrisch ansteuerbarer Polarisationsfilter P1, P2 mittels eines Aktors - beispielsweise eines Schrittmotors oder eines Servos- angesteuert werden.

In noch einer weiteren Ausführungsform der Erfindung sind die zumindest zwei Polarisationsfilter P1, P2 lineare Polarisationsfilter. Diese erlauben eine kostengünstige Bereitstellung.

Gemäß noch weiteren Ausführungsform der Erfindung weist die Verarbeitungseinheit uC beispielsweise einen Computer, einen Microcontroller, einen Mikroprozessor, einen ASIC oder einen FPGA auf. Damit kann die Erfindung leicht in andere Systeme integriert werden, wobei z.B. hardwarenahe Verarbeitungseinheiten häufig eine eigenständige schnelle Verarbeitung bereitstellen und andere Systeme von entsprechendem Aufwand entlasten. Zudem kann mit spezifischer Hardware und hierfür entwickelter Software die Robustheit aber auch der Energieaufwand häufig besser zur Verfügung gestellt werden.

In einer weiteren Ausführungsform der Erfindung weist der optische Sensor K ein CCD-Array oder einen CMOS-Array auf. Damit können kostengünstige Kamera-Lösungen verwendet werden.

Gemäß noch einer weiteren Ausführungsform der Erfindung kann die Verarbeitungseinheit uC mittels einer durch künstliche Intelligenz unterstützten Verarbeitung den zumindest einen elektrisch ansteuerbaren Polarisationsfilter P1, P2 ansteuern. Beispielsweise kann die künstliche Intelligenz unterstütze Verarbeitung Reinforcement Learning beinhalten.

Weiterhin kann in weiteren Ausführungsform der Erfindung vorgesehen sein, dass zumindest einer der zumindest zwei Polarisationsfilter P1, P2 eine Polarisationsfolie aufweist. Damit können die Kosten weiter reduziert werden.

Es sei angemerkt, dass die Verarbeitungseinheit aber nicht nur auf erhaltene Umgebungsbedingungen mit einer Änderung der relativen Position der Polarisationsfilter zueinander reagieren kann. Weiterhin kann auch vorgesehen sein, dass Kameraparameter gezielt eingestellt werden, wie z.B. Veränderung der Blende, Veränderung der Brennweite, Veränderung der Aufnahmezeiten, etc..

Durch die Integration von künstlicher Intelligenz zur Steuerung von Polarisationsfilter und Kameraeinstellungen ermöglicht die vorliegende Innovation die Nutzung bereits vorhandener Kameras ohne dedizierte Objektive und Sensoren.

Durch die Erfindung ist eine Kostenersparnis möglich, da nunmehr nicht mehr spezielle Systeme angeschafft werden müssen, sondern handelsübliche Geräte nachgerüstet werden können. Weiterhin wird eine verbesserte Erkennung von Referenzmuster bereitgestellt. Mittels der Erfindung ist eine automatische Anpassung an unterschiedliche Lichtverhältnisse und Reflexionen möglich. Dadurch wird die fehlerfreie Erkennung von Referenzmarkierungen optimiert und die Gesamtzuverlässigkeit des Systems gesteigert.

## Patentansprüche

1. System (1) zur verbesserten Referenzmustererkennung aufweisend einen optischen Sensor (K), wobei in Richtung der Bildachse des optischen Sensors zumindest zwei Polarisationsfilter (P1, P2) in Bildachsenrichtung hintereinander angeordnet sind, wobei die zumindest zwei Polarisationsfilter (P1, P2) relativ zueinander verstellbar sind, wobei zumindest einer der Polarisationsfilter (P1, P2) für die Zwecke der Verstellung elektrisch ansteuerbar verstellbar ist, wobei das System weiterhin eine Verarbeitungseinheit (uC) aufweist, die in Abhängigkeit von einem erfassten Bild durch den optischen Sensor (K) und zumindest einem weiteren Einstellungsdatum des optischen Sensors (K) den zumindest einen elektrisch ansteuerbaren Polarisationsfilter (P1, P2) derartig ansteuert, dass die Polarisationsebenen der zumindest zwei Polarisationsfilter (P1, P2) relativ zueinander verstellt werden, wenn in dem erfassten Bild kein Referenzmuster erkannt wird.

2. System (1) nach Anspruch 1, **dadurch gekennzeichnet, dass** das zumindest ein weiteres Einstellungsdatum ausgewählt ist aus der Gruppe aufweisend Helligkeit, Kontrast, Sättigung, Fokussierung.

3. System (1) nach Anspruch 1 oder 2, **dadurch gekennzeichnet, dass** der zumindest eine elektrisch ansteuerbare Polarisationsfilter (P1, P2) mittels eines Aktors angesteuert wird.

4. System (1) nach Anspruch 1, **dadurch gekennzeichnet, dass** der Aktor ein Schrittmotor oder ein Servo ist.

5. System (1) nach einem der vorhergehenden Ansprüche, **dadurch gekennzeichnet, dass** (die) zumindest zwei Polarisationsfilter (P1, P2) lineare Polarisationsfilter sind.

6. System (1) nach einem der vorhergehenden Ansprüche, **dadurch gekennzeichnet, dass** die Verarbeitungseinheit (uC) einen Computer, einen Microcontroller, einen ASIC oder einen FPGA aufweist.

7. System (1) nach einem der vorhergehenden Ansprüche, **dadurch gekennzeichnet, dass** der optische Sensor (K) ein CCD-Array oder einen CMOS-Array aufweist.

8. System (1) nach einem der vorhergehenden Ansprüche, **dadurch gekennzeichnet, dass** die Verarbeitungseinheit (uC) mittels einer durch künstliche Intelligenz unterstützten Verarbeitung den zumindest einen elektrisch ansteuerbaren Polarisationsfilter (P1, P2) ansteuert.

9. System (1) nach Anspruch 8, **dadurch gekennzeichnet, dass** die durch künstliche Intelligenz unterstützten Verarbeitung Reinforcement Learning ist.

10. System (1) nach einem der vorhergehenden Ansprüche, **dadurch gekennzeichnet, dass** zumindest einer der zumindest zwei Polarisationsfilter (P1, P2) eine Polarisationsfolie aufweist.
